# EUROPEAN PATENT SPECIFICATION

(11) **EP 1 226 382 B1**
(45) Date of publication and mention of the grant of the patent: **21.04.2004**
(21) Application number: 99955106.2
(22) Date of filing: 20.10.1999
(51) Int. Cl.: F16L 11/10

(54) **CUFFED HOSE AND METHOD OF MANUFACTURE**
SCHLAUCH MIT MANSCHETTE UND VERFAHREN ZU SEINER HERSTELLUNG
TUYAU A MANCHON ET PROCEDE DE FABRICATION

(43) Date of publication of application: 31.07.2002
(73) Proprietor: The Goodyear Tire & Rubber Company, Akron, Ohio 44316-0001 (US)
(72) Inventor: COOK, Andre Georges, Granby, Quebec J2E 1V6 (CA); LANGLOIS, Pascal, Granby, Quebec J2G 8V5 (CA); EMOND, Jacques, Bernard, Granby, Quebec J2G 4V4 (CA)
(74) Representative: Kutsch, Bernd
(86) International application number: PCT/US1999/024649
(87) International publication number: WO 2001/029474

(56) References cited:
- FR-A- 1 467 950
- GB-A- 1 239 387
- US-A- 2 032 753
- US-A- 4 856 720

## Description

### Technical Field

The present invention relates to composite hoses, more particularly to rubber and plastic hoses comprising an outer helically extending reinforcement layer. The hose is constructed to provide for easier coupling of the hose ends and any desired fittings.

### Background Art

Hoses manufactured with outer helical PVC, nylon, or other plastic-like polymer rod reinforcements are known in the art. Such hoses are also known as drop hoses. Drop hoses are mainly used for the transfer of various fluids, such as gasoline, petroleum based products, chemicals, food products, etc., in tank truck applications. Drop hoses, and similar corrugated hoses, are made by several different manufacturing methods, including those disclosed by US Patents 4,383,555, 4,471,813, 4,304,266, 4,012,272, and 3,938,929 and disclosed in W097/24543. The hose ends are generally later coupled with cam and groove fittings and band clamps.

Because of the need for a tight fit between a fitting and the hose, the outside diameter of a fitting shank and the inside diameter of the hose are almost identical; the shank is usually a bit larger than the hose ID. The slightly larger shank OD results in deformation of those portions of the hose that are in contact with the shank. Thus a certain force is required to insert the fitting shank into the hose. The force required to insert the shank into the hose increases if the hose is reinforced with a rigid, non-deformable material such as the outer helical PVC rod. To provide the necessary force or to reduce the required force, it is known in the art to apply lubricants to hose, to attempt to soft the PVC prior to insertion in the hose, or apply greater force to the fitting to ensure a proper insertion. All of these methods are time and labor consuming and may be detrimental to the hose or the fitting.

The configuration of the outer corrugations can also make the insertion of the fittings into the hose bore difficult and make it difficult to install the band clamps over the plastic spiral wire and achieve a leak proof connection without band distortion and damage to the hose or fitting. Over the years, aids have been developed to overcome these situations. One such aid is to place a piece of rope between the outer corrugations of the cover to achieve a flat surface at each end of the hose that will make it easier to install the band clamps and prevent distortion. Another aid is the use of a "banding coil." A banding coil is a separate spring or coil made out of a plastic-like material that is either screwed or wrapped on the cover and fills the corrugations created by the outer helical wire at each end of the hose. The result achieved by the banding coil is the same as the rope, which is to end up with a flatter surface to install the band clamps. Another aid is the use of a rubber-like sleeve that is slipped over the ends of the hose that also attempts to create a flatter surface.

The present invention of forming a drop hose with soft cuffed ends eliminates the known problem in the art and eliminates the use of external aids as described above in coupling this type of hose. Many other advantages also arise from the present invention, including easier insertion of the fitting into the hose, reduced labor in coupling the hose, better coupling retention, and a likely reduction of necessary inventory for hose distributors.

Corrugated rubber or plastic hose with cuffed ends are disclosed in the following patents. US-A- 4,099,744 discloses a hose end formed flat with no corrugations. US-A- 5,398,977, US-A- 5,497,810, and EP-A- 330894 disclose a plastic cuff inserted over the corrugations. US-A- 3,640,312, discloses an extruded hose end formed without corrugations and US-A- 4,456,034, US-A-4,996,741, US-A- 4,996,20, US-A- 4,295,496, and US-A- 4,669,508 all disclose extruded or rubber corrugated hoses with non-corrugated ends which are internally reinforced by helically extending wires placed within the extruded or preformed corrugations. However, the corrugations of these hoses are formed by the extruded layers or by internal helical means, differing from the external helical reinforcing means of the conventional drop hoses. It is the presence of the external helical reinforcing means of the drop hoses which has created the need for the external aids and high force required to apply fittings to the drop hoses.

FR-A- 1,467,950 discloses a rubber hose with a spiral reinforcement provided either internally or externally. The hose is additionally provided with an external sheath of polyvinyl chloride or other appropriate material. The hose end may be provided with a spiral ring which is internal to the sheath.

However, in the drop hose of the present invention, the corrugations are solely formed by the helically extending outer reinforcement, and the base hose material has a constant internal diameter. While forming cuffs on hose ends is known in the art and the need for a constant outer diameter at the end of drop hoses to provide the hose with fittings has long been recognized in the art, as evidenced by the numerous types of aids used with conventional drop hose ends, forming a drop hose with cuffed ends in the manner of the present invention has not been appreciated or recognized. The present invention is directed toward a solution of a long felt problem in the art and provides the many benefits listed above.

### Summary of the Invention

The present invention provides a flexible hose, a method of manufacturing such and a hose length as defined in the claims.

### Brief Description of the drawings

The invention will be described by way of example and with reference to the accompanying drawings in which:
FIG. 1 illustrates the inventive hose;
FIG. 2 is a cross-sectional view of the hose;
FIG. 3 illustrates the method of manufacturing the inventive hose;
FIG. 4 illustrates a portion of the hose during manufacture.

### Detailed Description of the Invention

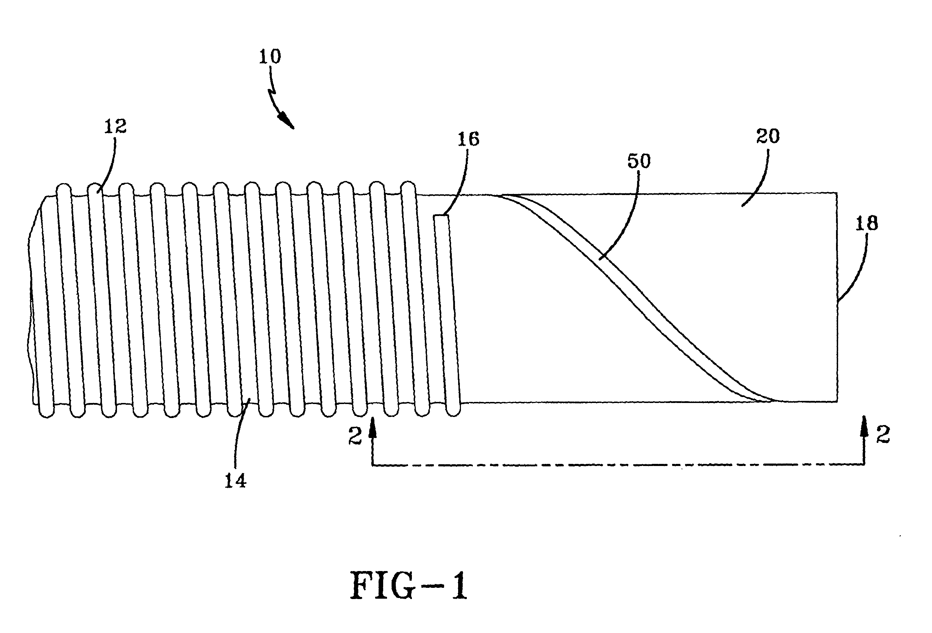

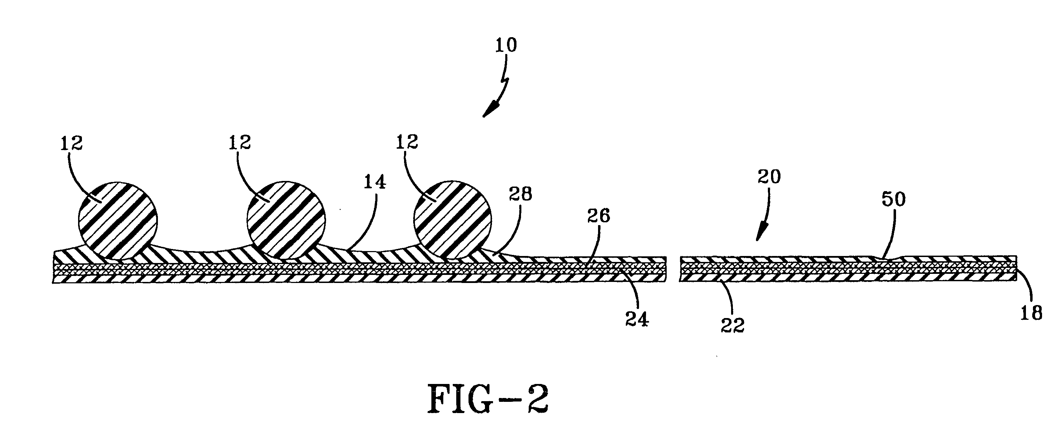

The hose 10 of the present invention is illustrated in FIG 1. The hose 10 has an external reinforcing rod 12 helically wound about a flexible hose base 14. The reinforcing rod 12 has a terminal end 16 located a distance from the terminal end 18 of the hose base 14, creating a soft hose cuff 20. The hose 10 has a constant internal diameter (see FIG 2), and a minimum and maximum outer diameter created by the corrugation effect of the reinforcing rod 12 and the flexible hose base 14 between the windings of the reinforcing rod 12. Since the soft cuff 20 is an extension of the flexible hose base 14, the cuff 20 has an outer diameter corresponding to the minimum outer diameter of the hose 10.

An exemplary construction of the hose 10 is illustrated in the cross-sectional view of FIG 2. The flexible hose base 14 is constructed from a base layer 22, two reinforcing plies 24, 26 and an outer cover layer 28. The hose base 14 may be provided with a number of layers differing from the illustrated two reinforcing layers 24, 26 and other rubber layers in addition to the base layer 22. The number and type of layers comprising the flexible hose base 14 is dependant upon the desired hose properties as determined by the end use of the hose 10.

The base layer 22 is constructed of conventional natural or synthetic thermoelastic vulcanizable material used in the manufacture of hoses. The reinforcing layers 24, 26 are also formed of conventional hose reinforcing materials. The cover layer 28 is formed from a thermoplastic or thermoelastic vulcanizable material that is capable of bonding to the base layer 22 and to the reinforcing rod 12 during curing of the hose 10. Examples of typical materials for the base and cover layers 22, 28 include, but are not limited to, nitrile rubber for the base layer 22 and a nitrile rubber/PVC blend for the cover layer 28. The reinforcing rod 12 is formed from a material that is more rigid and/or has a higher mechanical strength than the cover layer 28, such as polyvinylchloride. The reinforcing rod 12 may also have an internal reinforcing wire.

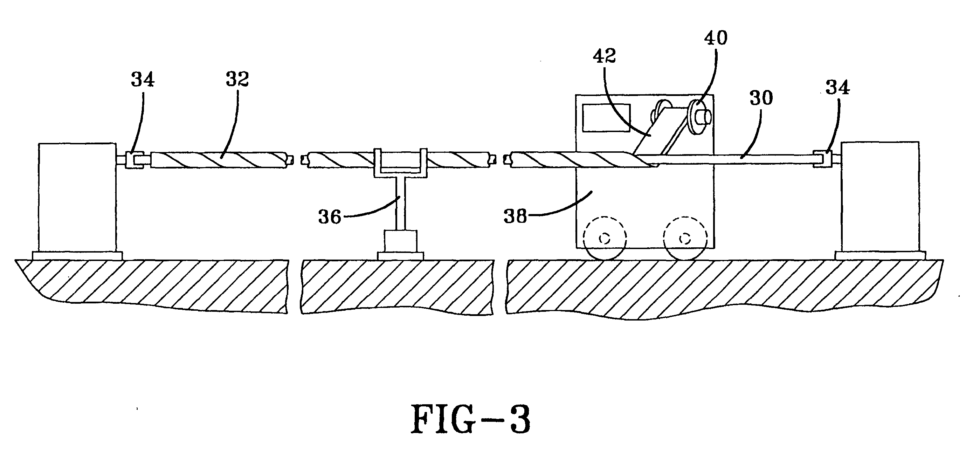

The manufacture of the hose 10 is achieved by spirally winding the various hose layers 12, 22, 24, 26, 28, onto a mandrel 30, see FIG 3, to produce a hose length 32 which is then cut into short lengths to produce the inventive soft-cuff hose 10. More details concerning one method of manufacturing the hose length 32 are disclosed in US Patent 4,856,720, which is incorporated herein by reference. In this method of manufacturing, the hose length 32 is built upon a long, straight circular mandrel 30 that is fixed to rotating drives 34 at each end of the mandrel 30. The mandrel 30 is supported by roller bearings 36 at approximately every fifteen feet. Parallel to the mandrel 30 is a trolley 38 equipped with material applicators 40. The material applicators 40 are bobbins provided with the different materials 42 used in the manufacture of the hose length 32, including rubber, fabric, wire helix, PVC rod, curing tape, and rope.

The materials 42 used to construct the hose length 32 are applied spirally onto the rotating mandrel 30 as the trolley 38 moves parallel to the mandrel 30. The hose length 32 is constructed in this manner by applying one layer of material 42 over the proceeding layer. Usually the trolley 38 will apply a layer in a first direction and the next layer in the opposite direction for symmetry and design purposes. For the illustrated hose length 32, the base rubber layer 22 is first applied to the rotating mandrel 30, followed by the reinforcing layers 24, 26, and then the cover layer 28. At this point in the construction of the hose length 32, a basic softwall rubber hose has been constructed on the mandrel.

To transform the softwall rubber hose length 32 into the helically reinforced, soft cuffed hose 10 of the present invention the following further steps are taken. At pre-selected regions 46 along the softwall rubber hose length 32, a material 44 is applied to render the pre-selected region non-adhesive to further layers applied to the hose length 32 in the pre-selected region. The pre-selected positions 46 along the hose length 32 are at locations corresponding to the lengths of the individual hoses 10 to be produced. For example, if twenty foot hoses 10 (including the cuffed ends) with six inch cuffs 20 at each terminal end are desired, a pre-selected non-adhesive region 46 is prepared along the hose length 32 for a length of twelve inches every nineteen feet. So for the entire mandrel length, the first six inches of the hose length 32 is rendered non-adhesive and then the trolley 38, applying a non-adhesive material 44, is moved nineteen feet further along the mandrel 30 from the position of the first non-adhesive region 46. The non-adhesive material 44 is then applied to the softwall rubber hose length 32 for a length of twelve inches to produce two six inch cuffs 20. The steps of moving the trolley 38 nineteen feet and applying twelve inches of non-adhesive material 44 is repeated along the length of the mandrel 30. The non-adhesive material 44 may be formed from any non-adhesive material that prohibits the outer rubber layer 28 from curing to the reinforcing rod 12. Such materials include, but are not limited to, nylon tape, film, or sheets, polyester tape, film or sheets, pre-cured rubber tape, film, or sheets, metallic film or sheets, Teflon film or sheets, or a liquid non-adhesion material.

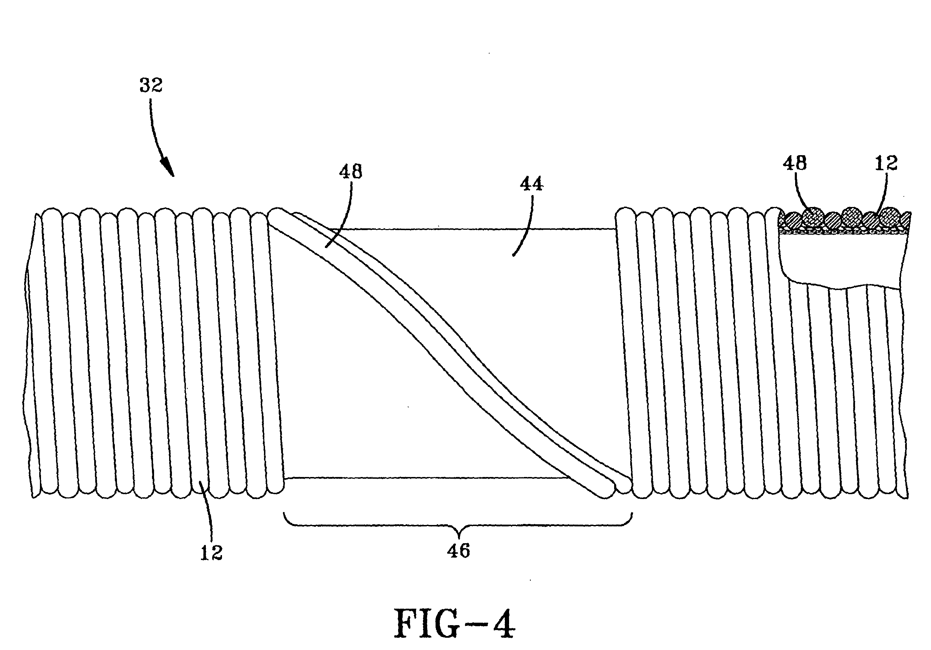

After the non-adhesive material 44 is applied in the pre-selected positions, using the trolley 38, the reinforcing rod 12 is applied to the rotating mandrel 30 and onto the softwall rubber hose length 32. The reinforcing rod 12 is applied with a constant pitch except over the pre-selected region 46 where the non-adhesive material 44 has been applied, see FIG. 4. As the trolley 38 moves past the pre-selected regions 46 where the non-adhesive material 44 is applied, the speed at which the mandrel 30 rotates is reduced, while the trolley speed is maintained, thus increasing the pitch at which the rod 12 is applied to the mandrel 30. As illustrated, the hose length 32 on the mandrel 40 has a variably pitched reinforcing rod 12.

After the variably pitched reinforcing rod 12 has been applied, a rope 48 is inserted in the spaces formed between the windings of the rod 12. The rope 48 is applied in the same manner as the reinforcing rod 12, with an increased pitch at the pre-selected areas 46 where a soft cuff 20 is to be formed on the finished hose 10. The diameter of the rope 48 is sized to maintain the desired pitching of the reinforcing rod 12 on the hose length 32. The rope 48 also acts as a mold to hold the hose layers 22, 24, 26, 28 and the rod 12 in place during the curing of the hose length 32. The rope 48 selected may be a conventional braided rope or a smooth rope; any conventional non-adhesive, flexible cord-type material may be used.

The hose length 32 is cured to vulcanize the layers 12, 22, 24, 26, 28 and create adhesion between the various layers 12, 22, 24, 26, 28, including between the reinforcing rod 12 and the hose cover layer 28. The rod 12 adheres to the cover layer 28 along the hose length 32, except where the non-adhesive material 44 has been applied. After the hose length 32 has been cured, the rope 48 is removed. After being removed from the mandrel 30, the hose length 32 is then cut into the desired final hose lengths. Preferably, the cuts are centered in the pre-selected regions 46 to produce two soft cuffs 20. The cuts may also be at one of the edges of the pre-selected region 46 if it is desired to form a hose 10 with only a single cuffed end 30. The portion of the reinforcing rod 12 that is not bonded to the outer cover layer 28 due to the presence of the non-adhesive material 44 is also removed. As a final step, if required, the non-adhesive material 44 is removed from the hose cuffs 20.

Due to the curing of the hose length 32 with the rope 48 being wound between the pitched helical windings of the reinforcing rod 12, and the tension force used to wind the rope 48 onto the mandrel 30, the flexible hose base 14 creates an indented imprint between the windings of the rod 12. The imprint from the rope 48 also extends into the soft cuff 20, creating a slight indent 50 in the soft cuff 30. The imprint indent 50 in the cuff 30 does not adversely affect the seal needed in applying a fitting to the hose cuff 30. If the rope 48 has a braided or textured pattern, then the indented imprint will be also have a braided or textured pattern.

As noted above, the hose 10 is manufactured by spirally winding the hose layers 12, 22, 24, 26, 28, onto a mandrel 30 to produce a hose length 32 which is then cut into short lengths with at least one soft cuffed end 30. The hose layers 12, 22, 24, 26, 28 may be applied to the mandrel 30 by means other than the illustrated traveling trolley 38 and material applicator 40. The layers 12, 22, 24, 26, 28 may be applied by moving a rotating mandrel 30 past a stationary material applicator 40. The layers 12, 22, 24, 26, 28 may also be applied by helically hand-winding the material 42 onto either a rotating or stationary mandrel 30.

Additionally, after the pre-selected region 46 has been modified to render that portion of the hose length 32 non-adhesive, the reinforcing rod 12 and supporting rope 48 may be applied by methods other than varying the pitch of the rod 12 and the rope 48. The reinforcing rod 12 may be applied at a constant pitch for the entire hose length 32, but with a reduced tension in the pre-selected non-adhesive regions 46. The rope 48, likewise, would then be applied at a constant pitch but with reduced tension in the pre-selected regions. The reduced tension of the rod 12 and rope 48 prevent the creation of multiple indents in the created soft cuff 20.

Since the inventive hose 10 has a terminal end 18 defined by a substantially constant inside and outside diameter for a defined length, it is easier to install any desired fittings to the cuffed hose end without the difficulties experienced with non-cuffed hoses and without needing to use known fitting aids as previously discussed.

## Claims

1. A flexible hose (10) comprising a flexible material (14), and a reinforcing rod (12) bonded to the flexible material (14), the flexible material (14) being formed with terminal ends (18), the reinforcing rod (12) having at least one terminal end (16) located short of the terminal ends (18) of the flexible material (14) providing thereby a soft cuff (20),
**characterized by**:
- the flexible material (14) comprising multiple elastomeric layers (22, 24, 26, 28);
- the reinforcing rod (12) being positioned externally of the outermost layer of the flexible material (14);
- the hose 10 having a constant internal diameter, and a minimum and maximum outer diameter created by the corrugation effect of the reinforcing rod (12) and the flexible material (14) between the windings of the reinforcing rod (12); and
- the cuff (20) having an outer diameter corresponding to the minimum outer diameter of the hose (10).

2. The flexible hose (10) in accordance with claim 1 having an imprinted indent (50) extending through the soft cuff (20).

3. The flexible hose (10) in accordance with claim 2, wherein the reinforcing rod (12) is wound at a pitch externally of the flexible material (14) and the indent (50) is wound at a pitch greater than the pitch of the reinforcing rod (12).

4. A method of manufacturing a flexible hose (10) comprising
a) rotating a mandrel (30)
b) feeding a length of material (42) onto the mandrel (30) as the mandrel (30) rotates, to build a hose length (32) on the mandrel (30),
c) feeding a second length of material in the form of a reinforcing rod (12) onto the mandrel (30) as the mandrel (30) rotates to form a helical reinforcing rod (12) on the hose length (32), and
d) curing the hose length (32),
**characterized by**:
prior to feeding the second length of material onto the mandrel (30), modifying the hose length (32) to create non-adhesive regions (46) where the second length of material is prohibited from bonding to the outermost layer (28) of the hose.

5. The method of manufacturing a hose (10) in accordance with claim 4, **characterized by** applying a third material (44) to the hose length (32) to create the non-adhesive regions (46).

6. The method of manufacturing a hose (10) in accordance with claim 4, **characterized by** cutting the hose length (32) in the non-adhesive regions (46).

7. The method of manufacturing a hose (10) in accordance with claim 4, **characterized by** varying the speed at which the mandrel (30) rotates as the reinforcing rod (12) is feed onto the mandrel (30) at the non-adhesive regions (46).

8. The method of manufacturing a hose (10) in accordance with claim 4, **characterized by** reducing the winding tension of the reinforcing rod (12) as the reinforcing rod (12) is feed onto the mandrel (30) at the non-adhesive regions (46).

9. A hose length (32) formed by a method according to claim 4 comprising multiple elastomeric layers (22, 24, 26, 28) and a reinforcing rod (12) helically woun externally of the outermost elastomeric layer (28), **characterized by**:
non-adhesive regions (46) formed externally of the outermost elastomeric layer (28) periodically spaced along the hose length (32), thus prohibiting the outermost elastomeric layer from bonding to the reinforcing rod (12).

10. The hose length (32) in accordance with claim 9, **characterized by** a rope (48) being wound adjacent to the reinforcing rod (12).

## Patentansprüche

1. Flexibler Schlauch (10), der ein flexibles Material (14) und einen Verstärkungsstab (12), der mit dem flexiblen Material (14) verbunden ist, umfasst, wobei das flexible Material (14) mit Anschlussenden (18) ausgebildet ist und wobei der Verstärkungsstab (12) wenigstens ein Anschlussende (16) aufweist, das kurz vor den Anschlussenden (18) des flexiblen Materials (14) angeordnet ist, wodurch eine weiche Manschette (20) geschaffen wird,
**dadurch gekennzeichnet, dass**:
- das flexible Material (14) mehrere elastomere Schichten (22, 24, 26, 28) umfasst;
- der Verstärkungsstab (12) außen auf der äußersten Schicht des flexiblen Materials (14) angeordnet ist;
- der Schlauch 10 einen konstanten Innendurchmesser sowie einen minimalen und einen maximalen Außendurchmesser, die
durch den Riffelungseffekt des Verstärkungsstabs (12) und des Materials (14) zwischen den Wicklungen des Verstärkungsstabs (12) hervorgerufen werden, besitzt; und
- die Manschette (20) einen Außendurchmesser besitzt, der dem minimalen Außendurchmesser des Schlauchs (10) entspricht.

2. Flexibler Schlauch (10) nach Anspruch 1, der eine eingedrückte Kerbe (50) aufweist, die sich durch die weiche Manschette (20) erstreckt.

3. Flexibler Schlauch (10) nach Anspruch 2, bei dem der Verstärkungsstab (12) mit einer Steigung außen auf das flexible Material (14) gewickelt ist und die Kerbe (50) mit einer Steigung gewunden ist, die größer als die Steigung des Verstärkungsstabs (12) ist.

4. Verfahren zur Herstellung eines flexiblen Schlauchs (10), umfassend
a) Drehen eines Dorns (30),
b) Beschicken des Dorns (30) mit einer Länge aus Material (42), wenn sich der Dorn (30) dreht, um eine Schlauchlänge (32) auf dem Dorn (30) aufzubauen,
c) Beschicken des Dorns (30) mit einer zweiten Länge von Material in Form eines Verstärkungsstabs (12), wenn sich der Dorn (30) dreht, um einen schraubenförmigen Verstärkungsstab (12) auf der Schlauchlänge (32) zu bilden, und
d) Vulkanisieren der Schlauchlänge (32),
**dadurch gekennzeichnet, dass**:
vor dem Beschicken des Dorns (30) mit der zweiten Länge von Material die Schlauchlänge (32) modifiziert wird, um nicht haftende Bereiche (46) zu schaffen, wo verhindert wird, dass sich die zweite Materiallänge mit der äußersten Schicht (28) des Schlauchs verbindet.

5. Verfahren zur Herstellung eines Schlauchs (10) nach Anspruch 4, **gekennzeichnet durch** das Aufbringen eines dritten Materials (44) auf die Schlauchlänge (32), um die nicht haftenden Bereiche (46) zu schaffen.

6. Verfahren zur Herstellung eines Schlauchs (10) nach Anspruch 4, **gekennzeichnet durch** das Durchschneiden der Schlauchlänge (32) in den nicht haftenden Bereichen (46).

7. Verfahren zur Herstellung eines Schlauchs (10) nach Anspruch 4, **gekennzeichnet durch** das Variieren der Geschwindigkeit, mit der sich der Dorn (30) dreht, wenn dieser an den nicht haftenden Bereichen (46) mit dem Verstärkungsstab (12) beschickt wird.

8. Verfahren zur Herstellung eines Schlauchs (10) nach Anspruch 4, **gekennzeichnet durch** Verringern des Wicklungszugs des Verstärkungsstabs (12), wenn der Dorn (30) an den nicht haftenden Bereichen (46) mit dem Verstärkungsstab (12) beschickt wird.

9. Schlauchlänge (32), die nach einem Verfahren nach Anspruch 4 gebildet wird und mehrere elastomere Schichten (22, 24, 26, 28) sowie einen Verstärkungsstab (12), der schraubenförmig außen auf die äußerste elastomere Schicht (28) gewickelt ist, umfasst, **gekennzeichnet durch**:
nicht haftende Bereiche (46), die außen und über die Schlauchlänge (32) periodisch beabstandet auf der äußersten elastomeren Schicht (28) gebildet sind, wodurch verhindert wird, dass sich die äußerste elastomere Schicht mit dem Verstärkungsstab (12) verbindet.

10. Schlauchlänge (32) nach Anspruch 9, **gekennzeichnet durch** ein Seil (48), das neben dem Verstärkungsstab (12) gewickelt ist.

## Revendications

1. Tuyau flexible (10) comprenant une matière flexible (14) et une tige de renforcement (12) collée à la matière flexible (14), la matière flexible (14) comportant des extrémités terminales (18), la tige de renforcement (12) possédant au moins une extrémité terminale (16) disposée à courte distance des extrémités terminales (18) de la matière flexible (14) en procurant ainsi une manchette souple (20), **caractérisé par le fait que** :
- la matière flexible (14) comprend de multiples couches élastomères (22, 24, 26, 28) ;
- la tige de renforcement (12) est disposée à l'extérieur de la couche de la matière flexible 14 située le plus à l'extérieur ;
- le tuyau flexible (10) possède un diamètre interne constant et un diamètre externe minimal et maximal, que l'on obtient par l'effet d'ondulations de la tige de renforcement (12) et de la matière flexible (14), entre les enroulements de la tige de renforcement (12) ; et
- la manchette possède un diamètre externe correspondant au diamètre externe minimal du tuyau flexible (10).

2. Tuyau flexible (10) selon la revendication 1, possédant un renfoncement imprimé (50) s'étendant à travers la manchette souple (20).

3. Tuyau flexible 10 selon la revendication 2, dans lequel la tige de renforcement (12) est enroulée conformément à un pas à l'extérieur de la matière flexible (14) et le renfoncement (50) est enroulé en fonction d'un pas supérieur ou pas de la tige de renforcement (12).

4. Procédé de fabrication d'un tuyau flexible (10) comprenant le fait de :
a) faire tourner un mandrin (30) ;
b) alimenter le mandrin (30) avec une longueur de matière (42) lorsque le mandrin (30) tourne pour obtenir une longueur de tuyau flexible (32) sur le mandrin (30) ;
c) alimenter le mandrin (30) avec une deuxième longueur de matière sous la forme d'une tige de renforcement (12) lorsque le mandrin (30) tourne pour obtenir une tige de renforcement hélicoïdale (12) sur la longueur de tuyau flexible (32), et
d) durcir la longueur de tuyau flexible (32) ;
**caractérisé par** le fait de :
avant d'alimenter la deuxième longueur de matière sur le mandrin (30), modifier la longueur de tuyau flexible (32) dans le but de créer des zones non adhésives (46) dans lesquelles on empêche la deuxième longueur de matière de coller à la couche (28) du tuyau flexible, située le plus à l'extérieur
.

5. Procédé de fabrication d'un tuyau flexible (10) selon la revendication 4, **caractérisé par** le fait d'appliquer une troisième matière (44) sur la longueur de tuyau flexible (32) dans le but de créer les zones non adhésives (46).

6. Procédé de fabrication d'un tuyau flexible (10) selon la revendication 4, **caractérisé par** le fait de couper la longueur de tuyau flexible (32) dans les zones non adhésives (46).

7. Procédé de fabrication d'un tuyau flexible (10) selon la revendication 4, **caractérisé par** le fait de faire varier la vitesse à laquelle tourne le mandrin (30) lorsque la tige de renforcement (12) est alimentée au mandrin (30) aux zones non adhésives (46).

8. Procédé de fabrication d'un tuyau flexible (10) selon la revendication 4, **caractérisé par** le fait de réduire la tension d'enroulement de la tige de renforcement (12) lorsque la tige de renforcement (12) est alimentée au mandrin (30) aux zones non adhésives (46).

9. Longueur de tuyau flexible (32) formée par un procédé selon la revendication 4, comprenant de multiples couches élastomères (22, 24, 26, 28) et une tige de renforcement (12) soumise à un enroulement hélicoïdal à l'extérieur de la couche élastomère (28) située le plus à l'extérieur, **caractérisée par** des zones non adhésives (46) qui sont formées à l'extérieur de la couche élastomère (28) située le plus à l'extérieur à des endroits équidistants sur la longueur (32) du tuyau flexible, pour ainsi empêcher le collage de la couche élastomère située le plus à l'extérieur à la tige de renforcement (12).

10. Longueur de tuyau flexible (32) selon la revendication 9, **caractérisée par** l'enroulement d'une corde (48) en position adjacente à la tige de renforcement (12).
